# EUROPÄISCHE PATENTSCHRIFT

(11) **EP 0 815 544 B1**
(45) Veröffentlichungstag und Bekanntmachung des Hinweises auf die Patenterteilung: **03.11.1999**
(21) Anmeldenummer: 95941715.5
(22) Anmeldetag: 15.12.1995
(51) Int. Cl.: G07F 17/30, G11B 27/00, G07F 7/10

(54) **MUSIKBOX**
MUSICBOX
BOITE A MUSIQUE

(30) Priorität: 13.03.1995 DE 19508992; 08.08.1995 DE 19529157; 20.10.1995 DE 19539172
(43) Veröffentlichungstag der Anmeldung: 07.01.1998
(60) Teilanmeldung: 99106527.7
(73) Patentinhaber: NSM AKTIENGESELLSCHAFT, 55411 Bingen (DE)
(72) Erfinder: NIEDERLEIN, Horst, D-55411 Bingen (DE); KÜHL, Thomas, D-55442 Daxweiler (DE)
(74) Vertreter: Gossel, Hans K., Dipl.-Ing.
(86) Internationale Anmeldenummer: EP9504974
(87) Internationale Veröffentlichungsnummer: WO9628797

(56) Entgegenhaltungen:
- WO-A-93/18465
- DE-A- 2 912 139
- DE-A- 4 228 692
- GB-A- 2 193 420
- GB-A- 2 240 869
- US-A- 5 166 886

## Beschreibung

Die Erfindung betrifft eine Musikbox nach dem Oberbegriff des Patentanspruchs 1.

Die Leistung und Wiedergabequalität von Musikboxen ist erheblich durch den Ersatz von Schallplatten durch CDs gesteigert worden, auf denen die abspielbaren Musikstücke in digitaler Form gespeichert sind. Es sind Musikboxen der eingangs angegebenen Art bekannt, die mit CD-Wechsler ausgestattet sind, die 100 CD speichern können. Diese bekannten Musikboxen erfordern jedoch eine aufwendige Mechanik, da die jeweilige CD, auf der sich das abzuspielende Musikstück befindet, dem Speicher entnommen und auf den CD-Abspielteller gelegt werden muß, gegebenenfalls nachdem die CD an ihren Platz in den Speicher zurückgeführt worden ist, die sich zuvor auf dem Abspielteller befunden hat. Befinden sich ausgewählte Musikstücke auf unterschiedlichen CDs, was üblicherweise der Fall sein wird, entstehen zwischen dem Abspielen ausgewählter Musikstücke längere Pausen, die durch den Wechsel der CD bedingt sind.

Desweiteren ist es durch die Verwendung von CDs als Massenspeicher auch möglich geworden, Video- und/oder Bild-Informationen digital zu speichern und über einen Monitor wiederzugeben. Auch hier besteht mitunter das Bedürfnis, auf die auf verschiedenen CDs gespeicherten Bilddaten gleichzeitig oder ohne Pause hintereinander zugreifen zu können.

Ein weiterer Nachteil einer mit einem CD-Wechsler ausgestatteten Musikbox besteht darin, daß zur Aktualisierung von Musikstücken alte CDs gegen neue CDs ausgetauscht werden müssen. Dies bedingt einen verhältnismäßig hohen Wartungsaufwand, da die CDs nur vor Ort ausgetauscht werden können.

Aus GB-A-2 193 420 ist eine Musikbox mit einem ausgelagerten Massenspeicher bekannt, aus dem über eine Datenfernleitung in die Musikbox digitale Musikdaten eingespielt werden können. Das Einspielen der Musikstücke über Datenfernleitungen ist teuer und die Musikbox kann auch nicht als in sich geschlossenes Gerät arbeiten.

Aufgabe der Erfindung ist es daher, eine Musikbox der eingangs angegebenen Art zu schaffen, die kostengünstig und in einfacher Weise mit einem an die Nachfrage angepaßtem Leistungsangebot betrieben werden kann.

Erfindungsgemäß wird diese Aufgabe durch die Merkmale des Patentanspruchs 1 gelöst.

Halbleiter-Speicher stehen heute im Megabyte-Bereich zu verhältnismäßig geringen Kosten zur Verfügung, so daß diese auch zur Speicherung digital codierter Musikstücke und/oder Videos und/oder Bilder und/oder Grafiken verwendet werden können. Gegenwärtig befinden sich 32-Megabyte-Speicher in der Entwicklung und es ist zu erwarten, daß in absehbarer Zukunft Speicher mit 64 Megabyte und sogar mit größerer Kapazität zu vertretbaren Preisen hergestellt werden.

Aus der DE-A-29 12 139 und DE-A-42 28 692 ist es an sich bekannt, Musikdaten auf kartenförmige Informationsträger oder Chipkarten mit Steckkontakten zu speichern, die beispielsweise eine CD ersetzen können, aber zum Auslesen der gespeicherten Daten nur einzeln nacheinander in Halterungen einsetzbar sind.

Aus GB-A-2 240 869 ist eine mehrere CDs abspielende Musikbox bekannt, die zur Identifizierung der einzelnen CDs mit diesen zugeordneten und in Schlitze eines Boards einsteckbaren Chipkarten versehen sind, die aber keine Musikdaten enthalten.

Die erfindungsgemäße Musikbox besitzt gegenüber herkömmlichen Musikboxen bzw. CD-Abspieleinheiten keine mechanisch bewegten Teile, wie Platten-Drehteller und Greifer- und Transporteinheiten zur Entnahme von Platten aus Speicherfächern, Transport der Platten zu dem Drehteller und Rückführung der Platten in die diese halternden Fächer. Außerdem lassen sich bei der erfindungsgemäßen Musikbox ausgewählte Musikstücke und/oder Videos und/oder Bilder und/oder Grafiken ohne Pausen abspielen, da ein direkter Zugriff auf die ausgewählten Musikstücke und/oder Videos und/oder Bilder und/oder Grafiken ohne bewegte mechanische Teile möglich ist. Demgegenüber ist bei herkömmlichen Musikboxen das Abspielen von Musikstücken ohne Pausenzeit nur mit größerem technischen Aufwand und unter Verwendung von mindestens zwei Abspieleinheiten möglich.

Die erfindungsgemäße Musikbox zeichnet sich durch Robustheit, niedriges Gewicht und geringe Abmessungen aus, da auf mechanisch bewegte Teile verzichtet werden kann.

Nach einer bevorzugten Ausführungsform ist vorgesehen, daß mindestens ein Speicher-Chip, vorzugsweise jedoch sämtliche Speicher-Chips, mit einem Inhaltsverzeichnis versehen ist, das für jedes Musikstück, Video oder Bild die Speicheradresse enthält. Die Bedieneinheit ist auf das Inhaltsverzeichnis derart abgestimmt, daß mit dieser die dem ausgewählten Musikstück, Video oder Bild zugeordnete Adresse anwählbar ist. Jeder Speicher-Chip enthält somit zusätzlich ein Inhaltsverzeichnis, das als Eingangsgröße die jeweilige Auswahltaste bzw. den jeweiligen Auswahlcode und als fest zugeordnete Ausgangsgröße die Startadresse des Musikstücks, Videos oder Bilds enthält. Als weitere Einträge kann das Inhaltsverzeichnis noch spezielle Informationen zum jeweiligen Musikstück, Video oder Bild enthalten.

Bei den Speicher-Chips kann es sich um festprogrammierte Speicher (ROM) handeln. Zweckmäßigerweise sind die Speicher-Chips jedoch programmierbar (PROM) oder wiederholbar programmierbar (EPROM). Als wiederholt programmierbare Speicher können auch Batterie-RAMs oder auch von der Stromversorgung der Musikbox gepufferte RAMs eingesetzt werden.

Vorzugsweise sind die auf den Speicher-Chips geladenen Informationen des Inhaltsverzeichnisses auf einem Monitor darstellbar. Auf dem Monitor erscheinen die in den Inhaltsverzeichnissen der Speicher-Chips gesammelten Daten in Form von Texten und/oder Bildern und/oder Grafiken und gegebenenfalls mit zusätzlichen Informationen, so daß der Benutzer von dem Monitor einen Auswahlcode ablesen und diesen über die Bedieneinheit eingeben kann. Die Darstellung auf dem Monitor kann durchlaufend oder auch durch die Bedieneinheit fortschaltbar erfolgen. Die Bedieneinheit besteht dabei vorzugsweise aus einer Tastatur und/oder aus einem Tastmonitor (touch-screen) und kann gegebenenfalls auch eine Fernbedienung umfassen.

Um den Speicherraum der Speicher-Chips besser ausnutzen zu können, ist nach einer weiteren vorteilhaften Ausgestaltung vorgesehen, daß die digitalen Daten auf den Speicher-Chips in komprimierter Form gespeichert werden. Zum Abspielen müssen die digitalen Daten dazu wieder dekomprimiert werden. Die Komprimierung und Dekomprimierung digitaler Audio-, Video- oder Bild-Daten einschließlich der zugehörigen Encoder und Decoder ist grundsätzlich bekannt. Die komprimierten Daten können zum einen von einer Speichersteckkarte auf die andere Speichersteckkarte direkt übertragen werden. Zum anderen ist es auch möglich, digitale Daten in einen Zwischenspeicher zunächst in unkomprimierter Form aufzunehmen und sodann nach einer Komprimierung die Daten auf eine Speichersteckkarte zu übertragen. Außerdem können auch gestörte Daten unterdrückt werden, ohne daß die Wiedergabe einen merklichen Qualitätsverlust erleidet.

Eine besondere Form der Wiedergabe von Musikstücken besteht in sogenannten "Videoclips". Nach einer weiteren bevorzugten Ausführungsform ist deshalb vorgesehen, daß bei der Wiedergabe der digital gespeicherten Audiodaten gleichzeitig Videos oder Bilder auf dem Monitor darstellbar sind.

Ausführungsbeispiele der Erfindung werden nachstehend anhand der Zeichnung näher erläutert. In dieser zeigt
- Fig. 1: eine schematische Darstellung der Frontansicht einer Musikbox,
- Fig. 2: eine Speichersteckkarte mit einem Speicher-Chip,
- Fig. 3: eine Batterie von Speichersteckkarten in Draufsicht und Seitenansicht, und
- Fig. 4: ein Ausführungsbeispiel der Erfindung.
- Fig. 7: ein viertes Ausführungsbeispiel der Erfindung.

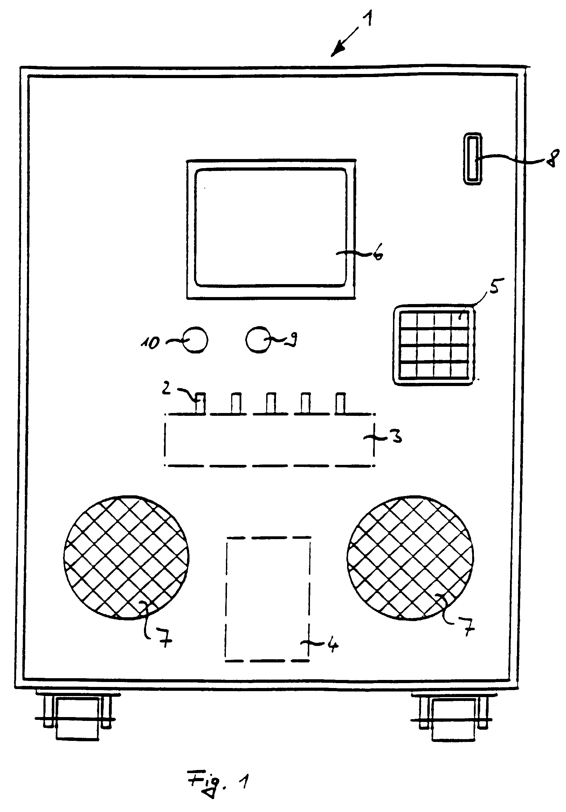

Fig. 1 zeigt die Frontansicht einer Musikbox 1 mit den erfindungsgemäßen Zusatzeinrichtungen.

In der Frontplatte ist für den Bediener gut sichtbar ein Bildschirm 6 eingelassen, daneben befindet sich eine Tastatur 5 zur Eingabe von Buchstaben und/oder Zahlenkombinationen. Oberhalb der Bedienelemente befindet sich ein Münzeinwurf 8, an dem sich im Gerät eine Münzverarbeitung anschließt.

Im unteren Randbereich der Musikbox sind zwei Lautsprecher 7 zur Ausgabe der digital gespeicherten Musikstücke eingelassen. Zusätzlich können Anzeigeelemente 9, 10 an der Frontplatte vorgesehen sein, um bestimmte Zustände des Gerätes anzuzeigen. Im Gerät befinden sich diverse Schaltungsmodule, von denen eine Batterie 3 von Speichersteckkarten 2 und eine Steuereinheit (SE) 4 gestrichelt dargestellt sind.

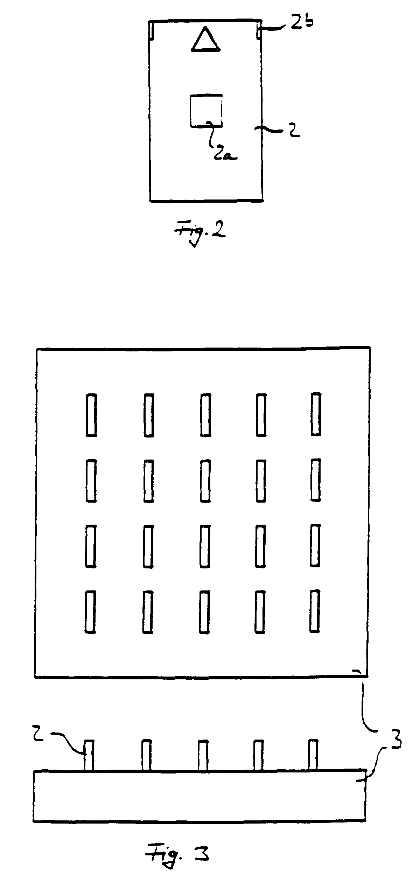

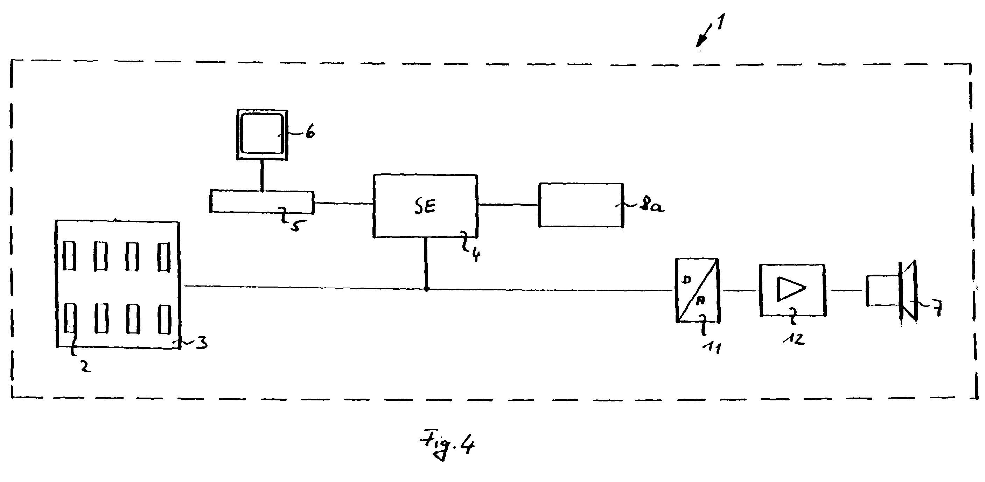

Fig. 2 zeigt eine Speichersteckkarte 2, die als Träger für einen Speicher-Chip 2a dient und die an einer Längsseite mit einer Reihe von Steckkontakten 2b versehen ist. Jeder Steckkontakt ist dabei mit einem Pin des Speicher-Chips verbunden. Fig. 3 zeigt, wie mehrere Speichersteckkarten in einer Batterie 3 von Speichersteckkarten zusammengefaßt sind. Die Speichersteckkarten sind dabei in Kontakthalter der Batterie einsteckbar.

Anhand von Fig. 4 wird nun der grundsätzliche Aufbau und die Funktion der erfindungsgemäßen Musikbox beschrieben. Die Steuereinheit 4, bei der es sich um einen Mikrocomputer handelt, steuert sämtliche Gerätefunktionen. Durch Einwurf des erforderlichen Geldbetrages kann der Bediener das Gerät aktivieren. Die Münzverarbeitung 8a prüft dabei, ob tatsächlich der geforderte Betrag eingeworfen wurde. Auf dem Bildschirm 6 erscheint daraufhin eine Übersicht aller Musikstücke, die auf den Speicher-Chips in digitaler Form gespeichert sind. Die Informationen über die Musikstücke, wie z.B. Titel, Musikgruppe, oder ähnliches, sind auf mindestens einem Speicher-Chip, vorzugsweise auf sämtlichen Speicher-Chips, unter einer fest vorgegebenen Speicheradresse in einem Inhaltsverzeichnis abgespeichert. Somit kann der Mikrocomputer 4 diese Informationen von jedem Speicher-Chip unter der besagten Speicheradresse auslesen und auf dem Bildschirm 6 zur Anzeige bringen, wobei die Informationen aus Text und/oder Bildern bestehen können. Mit Hilfe der Tastatur 5 kann der Bediener zwischen verschiedenen Bildschirmseiten wie in einem Katalog blättern.

Die Auswahl eines bestimmten Musikstückes erfolgt z. B. durch eine Buchstaben-/Zahlenkombination, die auf der Übersichtsanzeige bei jedem Musikstück vermerkt ist. Eine von dem Bediener auf der Tastatur 5 eingegebene Buchstaben-/Zahlenkombination wird von dem Mikrocomputer 4 in eine Startadresse des jeweiligen Speicher-Chips umgerechnet. Diese Umrechnung geschieht aufgrund von Dateninformationen, die ebenfalls in den Inhaltsverzeichnissen der Speicher-Chips gespeichert sind. Die unter der somit berechneten Startadresse abgespeicherten Daten werden sodann in Echtzeit einem DA-Wandler 11 zugeführt und über einen Verstärker 12 auf dem Lautsprecher 7 ausgegeben. Falls mehrere Musikstücke vom Bediener angewählt wurden, können diese hintereinander ohne Pausenzeit abgespielt werden, da ein Sprung von einer Speicheradresse eines Musikstücks zu einer Speicheradresse eines anderen Musikstücks keine Zeitverzögerung zur Folge hat.

Auf den Speicher-Chip können natürlich digitale Daten jeglicher Form gespeichert werden. Neben digitalisierten Musikstücken lassen sich somit z.B. auch digitalisierte Videoinformationen in Form von stehenden oder bewegten Bildern abspeichern. Hierdurch ist es insbesondere möglich, ein sog. Video-Clip auf der Musikbox abzuspielen. Neben der Musikinformation, die über den Lautsprecher 7 ausgegeben wird, kann somit parallel dazu die entsprechende Bildinformation über den Bildschirm 6 zur Anzeige gebracht werden.

## Patentansprüche

1. Musikbox (1)
mit einem Audio- und/oder Video- und/oder Bild- und/oder Grafik-Daten speichernden digitalen Massenspeicher (3),
mit einer Bedieneinheit (5) zum Auswählen digital gespeicherter Musikstücke und/oder Videos und/oder Bilder und/oder Grafiken und
mit einer einen Mikroprozessor umfassenden Steuereinheit (4), die die mit einem DA-Wandler (11) in analoge Signale umgewandelten digitalen Audio-Daten einer Verstärker-Lautsprecher-Einheit (7, 12) und/oder die Video- und/oder Bild- und/oder Grafik-Daten einem Monitor (6) zuführt,
**dadurch gekennzeichnet,**
daß der Massenspeicher aus einer Batterie (3) aus austauschbaren Speichersteckkarten (2) besteht, die in mit Kontakten versehene Halter der Musikbox einsteckbar sind, wobei jede Speichersteckkarte mindestens einen nichtflüchtigen Halbleiter-Speicher-Chip (2a) aufweist, auf dem Audio- und vorzugsweise Video- und/oder Bild- und/oder Grafik-Daten gespeichert sind.

2. Musikbox nach Anspruch 1, dadurch gekennzeichnet, daß die Halbleiter-Speicher-Chips programmierbar (PROM) oder wiederholt programmierbar (EPROM, Batterie-RAM) sind.

3. Musikbox nach Anspruch 1 oder 2, dadurch gekennzeichnet, daß mindestens ein Halbleiter-Speicher-Chip mit einem Inhaltsverzeichnis versehen ist, das für die abzurufenden Musikstücke und/oder Videos und/oder Bilder und/oder Grafiken die jeweilige Speicheradresse sowie weitere Informationen enthält, wobei die Einträge des Inhaltsverzeichnisses über den Mikroprozessor auslesbar und/oder über die Bedieneinheit abrufbar sind.

4. Musikbox nach einem der Ansprüche 1 bis 3, dadurch gekennzeichnet, daß die digitalen Daten auf dem Halbleiter-Speicher-Chip in komprimierter Form gespeichert sind.

5. Musikbox nach einem der Ansprüche 1 bis 4, dadurch gekennzeichnet, daß ein Zugriff auf die auf den Speicher-Chips geladenen Daten derart erfolgt, daß mehrere Musikstükke und/oder Videos und/oder Bilder und/oder Grafiken ohne Pausenzeit hintereinander abspielbar sind.

## Claims

1. Music box (1)
having a digital mass storage device (3) storing audio and/or video and/or image and/or graphics data,
having an operating unit (5) for selecting digitally stored pieces of music and/or videos and/or images and/or graphics, and
having a control unit (4), which comprises a microprocessor and feeds the digital audio data that have been converted into analogue signals by a DA converter (11) to an amplifier-loud speaker unit (7, 12) and/or feeds the video and/or image and/or graphics data to a monitor (6),
**characterized**
in that the mass storage device consists of a battery (3) of exchangeable plug-in memory cards (2) which can be plugged into music box holders provided with contacts, each plug-in memory card having at least one non-volatile semiconductor memory chip (2a) on which audio and preferably video and/or image and/or graphics data are stored.

2. Music box according to Claim 1, characterized in that the semiconductor memory chips are programmable (PROM) cr repeatedly programmable (EPROM, Battery RAM).

3. Music box according to Claim 1 or 2, characterized in that at least one semiconductor memory chip is provided with a directory containing, for the pieces of music and/or videos and/or images and/or graphics to be called up, the respective memory address as well as further information items, it being possible for the entries in the directory to be read out by means of the microprocessor and/or to be called up by means of the operating unit.

4. Music box according to one of Claims 1 to 3, characterized in that the digital data are stored on the semiconductor memory chip in compressed form.

5. Music box according to one of Claims 1 to 4, characterized in that the data loaded on the memory chips are accessed in such a way that a plurality of pieces of music and/or videos and/or images and/or graphics can be played back one after the other without a pause time.

## Revendications

1. Boîte à musique (1) comportant
une mémoire numérique de grande capacité (3) mémorisant des données audio et/ou vidéo et/ou d'images et/ou de graphismes,
comportant un dispositif actionneur (5) pour sélectionner des morceaux de musique et/ou des vidéo et/ou des images et/ou des graphismes numériquement mémorisés et
comportant une unité de commande (4) comportant un microprocesseur, qui amène moyennant un convertisseur numérique/analogique (11) des données audio numériques transformées en signaux analogiques d'une unité amplificateur/haut-parleur (7, 12) et/ou les données vidéo et/ou d'images et/ou de graphismes à un moniteur (6),
**caractérisée** en ce que la mémoire de grande capacité (3) consiste en une batterie de cartes de mémoire enfichables échangeables (2) qui peuvent être enfichées dans la boîte à musique au moyen de supports pourvus de contacts, chaque carte de mémoire enfichable présentant au moins une puce de mémoire à semi-conducteur (2a) non volatile, sur laquelle des données audio et de préférence vidéo et/ou d'images et/ou de graphismes sont mémorisées.

2. Boîte à musique selon la revendication 1, caractérisée en ce que les puces de mémoire à semi-conducteur sont programmables (PROM) ou répétitivement programmables (EPROM, RAM à pile).

3. Boîte à musique selon les revendications 1 ou 2, caractérisée en ce qu'au moins une puce de mémoire à semi-conducteur est pourvue d'une table des matières qui comporte pour les morceaux de musique et/ou vidéo et/ou images et/ou graphismes à appeler l'adresse de mémoire correspondante ainsi que d'autres informations, les enregistrements de la table des matières pouvant être lus par le microprocesseur et/ou appelés par le dispositif actionneur.

4. Boîte à musique selon l'une quelconque des revendications 1 à 3, caractérisée en ce que les données numériques sont mémorisées de manière comprimée sur la puce de mémoire à semi-conducteur.

5. Boîte à musique selon l'une quelconque des revendications 1 à 4, caractérisée en ce que l'accès aux données chargées sur la puce d'accès se fait de manière à ce que plusieurs morceaux de musique et/ou vidéo et/ou images et/ou graphismes peuvent être joués en succession sans pause.
